# EUROPEAN PATENT APPLICATION

(11) **EP 1 881 215 A2**
(43) Date of publication of application: **23.01.2008**
(21) Application number: 07013514.0
(22) Date of filing: 10.07.2007
(51) Int. Cl.: F16C 33/44, F16C 33/56

(54) **Cage of synthetic resin for a rolling element bearing with sliding surfaces formed by annular ceramic inserts**

(30) Priority: 12.07.2006 JP 2006191220; 12.07.2006 JP 2006191224
(71) Applicant: JTEKT Corporation, Osaka-shi Osaka 542-8502 (JP)
(72) Inventor: Otsuka, Katsunori, Osaka-shi Osaka 542-8502 (JP)
(74) Representative: Hager, Thomas Johannes

(57) **Abstract**

A cage (5) includes a cage body (21) made of a synthetic resin, and a plurality of ceramic rings (22) formed integrally with the body (21) by insert molding to form pockets (6). Alternatively the ceramic rings (122) form guiding surfaces of the cage (105) with the inner or outer ring (102,103).

## Description

### BACKGROUND OF THE INVENTION

### 1. Field of the Invention

This invention relates to a rolling bearing and a cage for a rolling bearing, and more particularly to a rolling bearing and a rolling bearing cage, in which high-speed rotation properties thereof are enhanced.

### 2. Related Art

There is well known a ball bearing comprising an outer ring, an inner ring, a plurality of rolling elements (balls) disposed between the outer and inner rings, and a cage which is made of a synthetic resin, high-strength brass or other material, and has a plurality of pockets respectively receiving the balls. A problem to be solved with such a ball bearing is to enhance high-speed rotation properties (that is, an anti-seizure property, wear resistance, etc., during high-speed rotation) so that the ball bearing can be suitably used in a machine tool rotated at high speed. For example, there is proposed in JP-A-2002-227848 Publication a cage in which a rolling element-holding portion of the cage is made of a sintered material comprising a mixture of a solid lubricant and metal, and reinforcing portions made of a metal material are formed respectively at opposite ends of the rolling element-holding portion. Also, as means for enhancing an anti-seizure property, there is known a method of coating a rigid thin film.

The cage disclosed in the above JP-A-2002-227848 Publication has been developed on the premise that it is used under vacuum, and there are problems that it is difficult to convert this cage to one for use in an ordinary machine tool in which lubricant is supplied and that this is expensive. There has been a demand for a ball bearing and a cage for a ball bearing which are inexpensive and highly versatile and have excellent high-speed rotation properties. Further, the coating with the rigid thin film as described above is also expensive.

### SUMMARY OF THE INVENTION

It is an object of this invention to provide a rolling bearing and a cage for a rolling bearing which are inexpensive, highly versatile and excellent in high-speed rotation properties by improving the cage.

According to one aspect of the present invention, there is provided a rolling bearing including: an outer ring; an inner ring; a plurality of rolling elements disposed between said outer ring and said inner ring; and a cage including a cage body made of a synthetic resin in which said rolling elements are received; wherein at least one sliding portion is formed in said cage body onto which a ceramic ring integrated by insert molding.

According to another aspect of the invention, there is provided a cage for use in a rolling bearing comprising an outer ring, an inner ring, and a plurality of rolling elements disposed between said outer and inner rings, wherein said cage is adapted to hold said rolling elements, said cage comprising: a cage body made of a synthetic resin in which said rolling elements are received; wherein at least one sliding portion is formed in said cage body onto which a ceramic ring integrated by insert molding.

In the invention, the outer ring and the inner ring may be guided relatively to each other by forming a sliding contact between the cage and one of the outer ring and the inner ring, and the sliding portion of the cage body onto which the ceramic ring may be integrated by the insert molding is provided on a guide surface of the cage body to one of said outer ring and the inner ring.

Further, in the invention, the cage may include a plurality of pockets receiving said rolling elements; and a plurality of the ceramic rings may be integrated onto said pockets by the insert molding.

Preferably, the rolling bearing is a cylindrical roller bearing, angular ball bearing or a deep groove ball bearing, but may be of any other type.

The synthetic resin is, for example, PEEK, but is not limited to this. Examples of the ceramic material include silicon nitride, silicon carbide, alumina and zirconia, but the ceramic material is not limited to these.

Preferably, the cage has a cylindrical shape.

In the above rolling bearing and the above cage for the rolling bearing, preferably, at least one recess is formed in a surface of each of the ceramic rings which is in contact with the cage body, the synthetic resin fills in the recess of each of the rings during insert molding, thereby preventing the rings from withdrawal from the body.

Preferably, there are provided a plurality of above-mentioned recesses, and the recesses are, for example, a plurality of annular grooves extending in the circumferential direction over the entire periphery thereof or a plurality of straight grooves extending in the axial direction over the entire length thereof. However, the recesses are not limited to these.

The cage includes a pair of ring-shaped portions spaced a predetermined distance from each other in an axial direction, and a plurality of pillar portions arranged at predetermined intervals in a circumferential direction and interconnecting the two ring-shaped portions. In the case where the cage is of the inner ring-guide type, the ceramic rings are disposed respectively on inner peripheries of the two ring-shaped portions. In the case where the cage is of the outer ring-guide type, the ceramic rings are disposed respectively on outer peripheries of the two ring-shaped portions. The synthetic resin cage body includes a pair of ring-shaped portions spaced a predetermined distance from each other in the axial direction, and a plurality of pillar portions arranged at predetermined intervals in the circumferential direction and interconnecting the two ring-shaped portions. In the case where the cage is of the inner ring-guide type, an inner diameter of each ring-shaped portion is larger than an inner diameter of a ring-shaped portion defined by the pillar portions. In the case where the cage is of the outer ring-guide type, an outer diameter of each ring-shaped portion is smaller than an outer diameter of the ring-shaped portion defined by the pillar portions. In the case where the cage is of the inner ring-guide type, an inner diameter of each ceramic ring is preferably smaller than the inner diameter of the synthetic resin cage body (which is generally equal to the inner diameter of the ring-shaped portion defined by the pillar portions) in order that the ceramic rings can surely serve as guide surfaces, and in the case where the cage of the outer ring-guide type, the outer diameter of each ceramic ring is preferably larger than the outer diameter of the synthetic resin cage body (which is generally equal to the outer diameter of the ring-shaped portion defined by the pillar portions).

Preferably, the rolling elements include a plurality of balls.

In the rolling bearing of the invention and the cage of the invention for the ball bearing, at least one sliding portion is provided with a ceramic ring insert molding on the resin cage body, a lightweight design can be achieved by using the synthetic resin cage body. And besides, by combining the ceramic rings with this cage body, the cage has increased rigidity, and therefore is less liable to be broken. Furthermore, by forming the ceramic rings integrally with the synthetic resin cage body by insert molding, the cage can be produced at a low cost. Furthermore, the ceramic rings are disposed at inner peripheral surfaces of the respective pockets, and therefore a sliding resistance of the inner peripheral surface of each pocket is reduced, so that an anti-seizure property and wear resistance are enhanced, and therefore high-speed rotation properties and high durability in a poorly-lubricated condition can be obtained.

Furthermore, the ceramic rings are disposed on the guide surface, and therefore a sliding resistance of the guide surface is reduced, so that an anti-seizure property and wear resistance are enhanced, and therefore high-speed rotation properties and high durability in a poorly-lubricated condition can be obtained.

### BRIEF DESCRIPTION OF THE DRAWINGS

Fig. 1 is a longitudinal cross-sectional view of a first embodiment of a ball bearing of the present invention.
Fig. 2 is a perspective view of a cage of the ball bearing of the invention.
Fig. 3 is a perspective view of a modified ceramic ring for the ball bearing of the invention.
Fig. 4 is a perspective view of another modified ceramic ring for the ball bearing of the invention.
Fig. 5 is a longitudinal cross-sectional (axial cross-sectional) view of a second embodiment of a rolling bearing of the present invention, showing a pocket portion of a cage.
Fig. 6 is a perspective view showing the cage of the roller bearing of the second embodiment.
Fig. 7 is a longitudinal cross-sectional (axial cross-sectional) view of a third embodiment of a rolling bearing of the present invention, showing a pocket portion of a cage.
Fig. 8 is a perspective view showing the cage of the roller bearing of the third embodiment.

### DETAILED DESCRIPTION OF THE PREFERRED EMBODIMENTS

A preferred embodiment of the present invention will now be described with reference to the drawings.

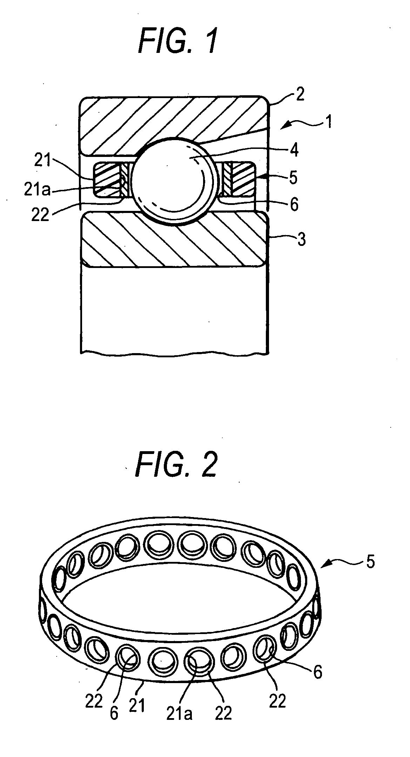

Fig. 1 shows a portion of a first embodiment of a ball bearing of the invention, and Fig. 2 shows the whole of a cage of this ball bearing.

The ball bearing 1 is an angular contact ball bearing, and comprises an outer ring 2, an inner ring 3, a plurality of balls 4 disposed between the two rings 2 and 3 and arranged at predetermined intervals in a circumferential direction, and the cage 5 having a plurality of pockets 6 respectively receiving the balls 4.

The cage 5 comprises a cage body 21 made of a synthetic resin, and sliding portions on to which ceramic rings 22 which are made of a ceramic material and integrated respectively at the pocket portions 6 of the cage body 21 by insert molding. Namely, a plurality of through holes 21a each larger in diameter than a pocket of an ordinary cage are formed through the synthetic resin cage body 21, and the ceramic rings 22 are fitted in the respective through holes 21a, each ring 22 having an inner peripheral surface corresponding in shape to a pocket.

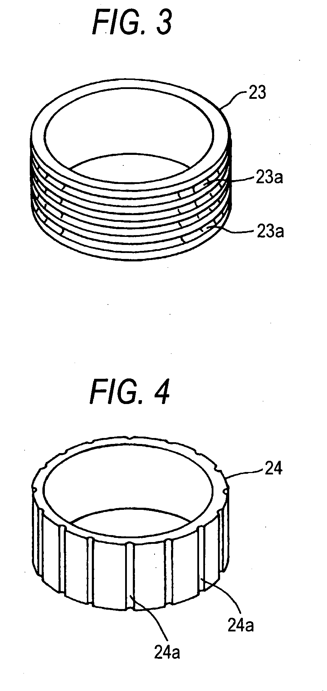

Fig. 3 shows a modified ceramic ring.

In Fig. 3, a plurality of annular grooves 23a are formed in an outer peripheral surface of the ceramic ring 23, and extend in a circumferential direction over the entire periphery thereof. When the cage 5 shown in Fig. 2 is formed by insert molding, using the ceramic rings 23, an injected synthetic resin fills in the plurality of grooves 23a, and the ceramic rings 23 are prevented from withdrawal from the synthetic resin cage body 21 by this concave-convex fitting arrangement.

Fig. 4 shows another modified ceramic ring.

In Fig. 4, a plurality of straight grooves 24a are formed in an outer peripheral surface of the ceramic ring 24, and extend in an axial direction thereof. When the cage 5 shown in Fig. 2 is formed by insert molding, using the ceramic rings 24, an injected synthetic resin fills in the plurality of straight grooves 24a, and the ceramic rings 24 are prevented from withdrawal from the synthetic resin cage body 21 by this concave-convex fitting arrangement.

The recesses formed in the ceramics ring 23, 24 for withdrawal prevention purposes are not limited to the grooves 23a and the grooves 24a. Although the angular contact ball bearing 1 including the outer ring 2 having a counterbore is shown in Fig. 1, the ball bearing in which the cage 5 is used is not limited to the configuration of Fig. 1.

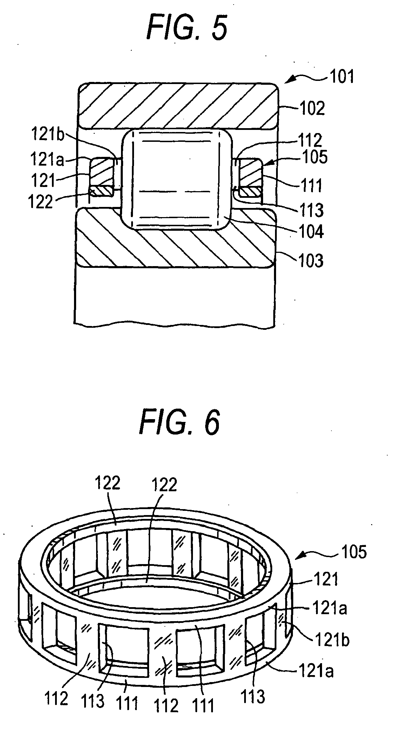

Fig. 5 shows a portion of a second embodiment of a rolling bearing of the invention, and Fig. 6 shows the whole of a cage of this rolling bearing.

The rolling bearing 101 is a cylindrical roller bearing, and comprises an outer ring 102, an inner ring 103 with ribs, a plurality of cylindrical rollers 104 disposed between the two rings 102 and 103 and arranged at predetermined intervals in a circumferential direction, and the cage 105 holding these cylindrical rollers 104.

The cage 105 is cylindrical, and includes a pair of ring-shaped portions 111 spaced a predetermined distance from each other in an axial direction, and a plurality of pillar portions 112 arranged at predetermined intervals in the circumferential direction and interconnecting the two ring-shaped portions 111. The cage 105 has a plurality of pockets 113 for respectively receiving the cylindrical rollers 104, each pocket 113 being defined by two adjacent pillar portions 112 and those portions of the two ring-shaped portions 111 extending between these two pillar portions 112. The cage 105 is of the inner ring-guide type, and the distance between an inner periphery of the cage 105 and the inner ring 103 is smaller than the distance between an outer periphery of the cage 105 and the outer ring 102.

The above configuration is similar to that of a conventional bearing, but the cage 105 of the second embodiment differs from conventional cages in that the cage 105 comprises a cage body 121 made of a synthetic resin such that reinforcing ceramic rings 122 which are made of a ceramic material are integrated onto sliding portions of the cage body 121. Namely, the cage 105 comprises the synthetic resin cage body 121 of a cylindrical shape, and the pair of reinforcing ceramic rings 122 of a cylindrical shape formed integrally on the sliding portions on an inner peripheral surface (that is, a guide surface) of the body 121 by insert molding. An inner diameter of each reinforcing ring 122 is generally equal to an inner diameter of an ordinary cage of the inner ring-guide type.

The synthetic resin cage body 121 includes a pair of ring-shaped portions 121a spaced a predetermined distance from each other in the axial direction, and a plurality of pillar portions 121b arranged at predetermined intervals in the circumferential direction and interconnecting the two ring-shaped portions 121a. An inner diameter of each ring-shaped portion 121a is larger than an inner diameter of a ring-shaped portion defined by the plurality of pillar portions 121b. An outer diameter of each of the reinforcing ceramic rings 122 is equal to the inner diameter of each ring-shaped portion 121a, and an inner diameter of the reinforcing ring 122 is slightly smaller than the inner diameter of the ring-shape portion defined by the pillar portions 121b. The reinforcing rings 122 are disposed respectively on the inner peripheries of the two ring-shaped portions 121a.

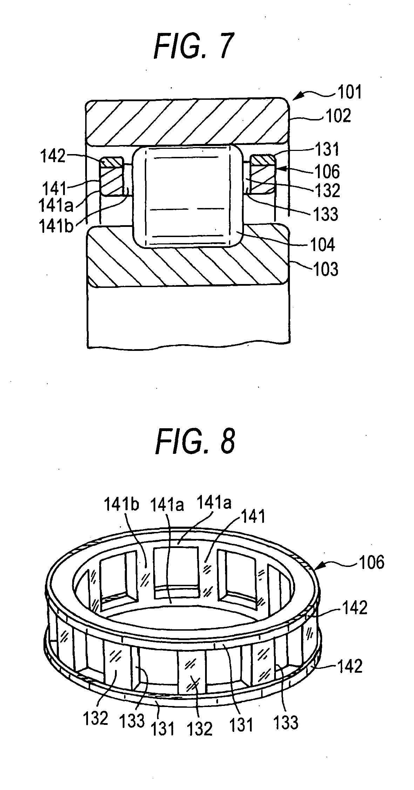

Fig. 7 shows a portion of a third embodiment of a rolling bearing of the invention, and Fig. 8 shows the whole of a cage of this bearing.

The rolling bearing 101 is a cylindrical roller bearing, and comprises an outer ring 102, an inner ring 103 with ribs, a plurality of cylindrical rollers 104 disposed between the two rings 102 and 103 and arranged at predetermined intervals in a circumferential direction, and the cage 106 holding these cylindrical rollers 104.

The cage 106 is cylindrical, and includes a pair of ring-shaped portions 131 spaced a predetermined distance from each other in an axial direction, and a plurality of pillar portions 132 arranged predetermined intervals in the circumferential direction and interconnecting the two ring-shaped portions 131. The cage 106 has a plurality of pockets 133 for respectively receiving the cylindrical rollers 104, each pocket 133 being defined by two adjacent pillar portions 132 and those portions of the two ring-shaped portions 131 extending between these two pillar portions 132. The cage 106 is of the outer ring-guide type, and the distance between an outer periphery of the cage 106 and the outer ring 102 is smaller than the distance between an inner periphery of the cage 106 and the inner ring 103.

The above configuration is similar to that of a conventional bearing, but the cage 106 of the third embodiment differs from conventional cages in that the cage 106 comprises a cage body 141 made of a synthetic resin, and reinforcing ceramic rings 142 which are made of a ceramic material. Namely, the cage 106 comprises the synthetic resin cage body 141 of a cylindrical shape, and the pair of reinforcing ceramic rings 142 of a cylindrical shape formed integrally on an outer peripheral surface (that is, a guide surface) of the body 141 by insert molding. An outer diameter of each reinforcing ring 142 is generally equal to an outer diameter of an ordinary cage of the outer ring-guide type.

The synthetic resin cage body 141 includes a pair of ring-shaped portions 141a spaced a predetermined distance from each other in the axial direction, and a plurality of pillar portions 141b arranged at predetermined intervals in the circumferential direction and interconnecting the two ring-shaped portions 141a. An outer diameter of each ring-shaped portion 141a is smaller than an outer diameter of a ring-shaped portion defined by the plurality of pillar portions 141b. An inner diameter of each of the reinforcing ceramic rings 142 is equal to the outer diameter of each ring-shaped portion 141a, and an outer diameter of the reinforcing ring 142 is slightly larger than the outer diameter of the ring-shape portion defined by the pillar portions 141b. The reinforcing rings 142 are disposed respectively on the outer peripheries of the two ring-shaped portions 141a.

Although not shown in the drawings, at least one recess or one groove can be formed in the non-guide surface of each reinforcing ceramic ring 122, 142, that is, that surface of the reinforcing ring to be contacted with the cage body 121, 141, and at the time of insert molding, a synthetic resin material fills in the recess or the groove, so that the body 121, 141 and the rings 122, 142 are prevented from being withdrawn from each other. Namely, similarly to the modifications shown in Figs 3 and 4 in the first embodiment, a plurality of grooves are formed in an inner peripheral surface of the ceramic ring (in the second and third embodiments, the inner peripheral surfaces of the ceramic rings 122,142 are in contact with the cage body 121,141) such that the grooves extend in a circum direction thereof or in an axial direction thereof.

Although the illustrated rolling bearing 101 of each of the second and third embodiments is the cylindrical roller bearing having the ribs formed on the inner ring, the cage 105, 106 can be used for other bearings having ribs formed on an outer ring and also for other cylindrical roller bearings. A deep groove ball bearing is analogous to a cylindrical roller bearing in that it includes a cylindrical cage, and a cage similar in construction to the above cages 105 and 106 can be applied to the deep groove ball bearing.

## Claims

1. A rolling bearing comprising:
an outer ring;
an inner ring;
a plurality of rolling elements disposed between said outer ring and said inner ring; and
a cage including a cage body made of a synthetic resin in which said rolling elements are received;
wherein at least one sliding portion is formed in said cage body onto which a ceramic ring integrated by insert molding.

2. A rolling bearing according to claim 1, wherein at least one recess is formed in a surface of said ceramic ring which is in contact with said cage body.

3. A rolling bearing according to claim 1, wherein said outer ring and said inner ring are guided relatively to each other by forming a sliding contact between said cage and at least one of said outer ring and said inner ring, and
said cage includes said sliding portion of said cage body onto which said ring made of the ceramic material is integrated by the insert molding is provided on at least one guide surface in at least one of said outer ring and said inner ring of said cage body.

4. A rolling bearing according to claim 1, wherein said cage includes a plurality of pockets receiving said rolling elements; and
a plurality of the rings made of the ceramic material are integrated onto said pockets by the insert molding.

5. A rolling bearing according to claim 4, wherein the rolling elements include a plurality of balls.

6. A cage for use in a rolling bearing comprising an outer ring, an inner ring, and a plurality of rolling elements disposed between said outer and inner rings, wherein said cage is adapted to hold said rolling elements, said cage comprising:
a cage body made of a synthetic resin in which said rolling elements are received;
wherein at least one sliding portion is formed in said cage body onto which a ceramic ring integrated by insert molding.

7. The cage for use in a rolling bearing according to claim 6, wherein at least one recess is formed in a surface of said ceramic ring which is in contact with said cage body.

8. The cage for use in a rolling bearing according to claim 6, wherein said cage includes said sliding portion of said cage body onto which said ring made of the ceramic material is integrated by the insert molding is provided on a guide surface of said cage body.

9. The cage for use in a rolling bearing according to claim 6, wherein said cage includes a plurality of pockets receiving said rolling elements; and
a plurality of said rings made of the ceramic material are integrated onto said pockets by the insert molding.

10. The cage for use in a rolling bearing according to claim 9, wherein the rolling elements include a plurality of balls.
